# EUROPEAN PATENT SPECIFICATION

(11) **EP 1 780 070 B1**
(45) Date of publication and mention of the grant of the patent: **21.12.2011**
(21) Application number: 06122025.7
(22) Date of filing: 10.10.2006
(51) Int. Cl.: B60N 2/08, B60N 2/12

(54) **Seat apparatus for a vehicle**
Sitzvorrichtung für ein Fahrzeug
Dispositif de siège pour un véhicule

(30) Priority: 28.10.2005 JP 2005315129
(43) Date of publication of application: 02.05.2007
(73) Proprietor: AISIN SEIKI KABUSHIKI KAISHA, Kariya-shi, Aichi 448-8650 (JP)
(72) Inventor: Kojima, Yasuhiro AISIN SEIKI KABUSHIKI KAISHA, Kariya-shi Aichi 448-8650 (JP)
(74) Representative: TBK

(56) References cited:
- EP-A- 0 798 154
- DE-A1-102006 009 265
- US-B1- 6 227 596

## Description

### FIELD OF THE INVENTION

The present invention relates to a seat apparatus for use in a vehicle, the seat apparatus which has a function for storing a relative position of a first rail and a second rail.

### BACKGROUND

JP-A-1994(06)-86194 discloses therein a vehicle seat apparatus. The vehicle seat apparatus includes: a lower rail secured to a floor of a vehicle; and an upper rail fixedly attached to a seat. The upper rail is supported by the lower rail in a relative slidable manner along a longitudinal direction thereof. In this vehicle seat apparatus, a longitudinal position of the seat is adjusted by moving the upper rail relative to the lower rail. The vehicle seat apparatus further includes a lock member, which locks a relative movement between the lower rail and the upper rail. The lock member is provided with detents and notches into which the detents are inserted. The lock member releases locking the upper and lower rails in response to an operation of a lock-releasing lever by an operator. A relative movement between the lower rail and the upper rail is hence allowed so that the seat is moved in the longitudinal direction.

Meanwhile, a vehicle seat apparatus has been recently studied by the inventor of the present invention, which is further provided with a memory mechanism which memorizes a relative position of the first rail and the second rail, and a memory canceling member which cancels a memory stored in the memory mechanism once an operating member is operated. The study was not known at a time of filing a priority application of the present application. The memory mechanism includes: a rail having plural lock portions arranged along the first rail secured to the vehicle floor; and a slider provided to be movable along the rail.

When the slider is fixedly locked or secured to the lock portion of the rail, the slider memorizes a relative position of the first rail and the second rail. That is, the slider memorizes a position of the seat in the longitudinal direction of the first rail.

On the other hand, once the operating lever is operated by an operator or user and the seat is to be moved back and forth, the memory canceling member is actuated in response to the operation of the operating lever, and so the slider is unlocked from the lock portion. In this case, because the slider has been engaged with the memory-canceling member, the seat is moved with the memory-canceling member, and the slider is moved in the same direction as the memory-canceling member and at the same amount as the moving amount thereof.

As the seat is slidably moved to a new position and a relative position between the first rail and the second rail is determined at the new position, the slider is locked or secured to the lock portion of the rail at the new position. This implies that the slider memorizes a new relative position between the first rail and the second rail. That is, the slider memorizes a new seat position in the longitudinal direction of the first rail.

For example, when the seat sliding movement stops and the operator discontinues operating the operating lever, the detents do not always position corresponding to the notches. That is, the detents on occasions may each be positioned between the two adjacent notches.
In this case, the slider positions between the two adjacent lock portions of the rail and has not been locked to the lock portions. Further, once the operator stops operating the operating lever, the slider is not sufficiently engaged with the memory-canceling member.

Accordingly, when the seat needs to be moved in a direction, e.g., in a forward direction of a vehicle, the slider cannot be moved in association with the seat movement. As a result, a position of the slider relative to the lock member may deviate from a prescribed position so that the slider may not memorize a position of the seat with high-precision.

The present invention has been made in view of the above circumstances, and provides a seat apparatus for a vehicle, in which a slider is effectively prevented from being operated to an inappropriate position relative to the lock member.

US 6 227 596 discloses a seat apparatus according to the preamble of claim 1.

### SUMMARY OF THE INVENTION

A seat apparatus according to the invention comprises the features of claim 1. According to an aspect of the present invention, a seat apparatus for a vehicle, includes: a first rail secured to a stationary portion of the vehicle; a second rail fixedly attached to a seat and movable relative to the first rail; a lock member locking the first rail and' the second rail so as to restrain a relative movement between the first rail and the second rail; and a position memorizing mechanism provided at the first rail and configured to memorize a first relative position between the first rail and the second rail. The seat apparatus is characterized in that the position memorizing mechanism includes: a third rail arranged along the first rail and having a lock portion; and a slider slidably moved along the third rail and engaged with and disengaged from the lock portion of the third rail. The seat apparatus further includes: an actuating member provided at one of the second rail and the slider and facing the other one thereof. The actuating member actuates the slider to move along the third rail in response to a movement of the second rail when the slider is at a disengaged state with the lock portion and to retain at a first position when the slider is at an engaged state with the lock portion.

The position memorizing mechanism includes: the third rail arranged along the first rail and having a lock portion; and a slider slidably moved along the third rail and engaged with and disengaged from the lock portion of the third rail. One of the second rail and the slider is firmly equipped with an actuating member facing the other one thereof. This actuating member adjusts a state of the slider between a state in which the slider is moved along the third rail and a state in which the slider is retained at a memory lock position. The slider is movable along the third rail when the slider is not locked with the lock portion. The slider is retained at the memory lock position when the slider is locked with the third rail. The seat apparatus for the vehicle further includes: an operating member connected to the lock member and configured to release the lock member from locking the first rail and the second rail; and an engagement member connected to the operating member for operating the position memorizing mechanism in response to an operation of the operating member so as to disengage the slider from the lock hole of the third rail, to establish the disengaged state when the slider is disengaged from the lock hole, and engage the slider to establish the engaged state when the slider is engaged with the lock hole.

As described above, the slider occasionally may not be engaged with the lock portion when a user stops operating an operation handle and the slidable movement of the seat is terminated. In this case, if the user stops operating the operation handle, an engagement between the engagement member and the slider is not performed sufficiently. Therefore, when the seat is moved in one direction, for example from the rear to the front, along with the second rail, the slider is not moved in association with the seat. The slider is hence positioned erroneously relative to the position of the lock portion, which may leads to an in correct memorization of a position of the seat by the slider.

The actuating member contributes to moving the slider along the third rail along with the movement of the seat when the slider has not been engaged with the lock portion. Therefore, when the seat is moved along with the second rail in a condition where the slider has not been engaged with the lock portion, the slider is moved by the actuating member in the same direction as the seat movement.

Further, when the slider has been engaged with the lock portion, the actuating member retains the slider at a memory lock position (first position). As a result, a memory lock function by the slider is maintained. That is, the first position is memorized by the slider locked with the lock portion.

As described above, the actuating member moves the slider in the same direction as the movement of the seat when the seat is moved along with the second rail in a condition where the slider has not been engaged with the lock portion of the third rail. Therefore, the slider is effectively prevented from positioned erroneously relative to the position of the detent of the second rail.

As far as the lock member includes a function for locking the first rail and the second rail and restraining a relative movement between the first rail and the second rail,'the structure and shape thereof are not limited. As far as the operating member is connected to the lock member and is configured to release the lock member from locking the first rail and the second rail, the structure and shape thereof are not limited.. The position memorizing mechanism includes a function for memorizing a relative position between the first rail and the second rail. As far as the engagement member is connected to the operating member for operating the position memorizing mechanism in response to an operation of the operating member so as to disengage the slider from the lock hole of the third rail, the structure and shape thereof are not limited.

The position memorizing mechanism includes the third rail arranged along the first rail and having the lock portion; and the slider slidably moved along the third rail and engaged with and disengaged from the lock portion of the third rail. The third rail is formed with or provided with the lock portion or lock portions that is engageable with the slider. As far as the third rail is provided with the lock portion, the third rail can be provided integrally with the first rail. The slider is a movable member, which includes a memory function for memorizing an original position of the seat.

The actuating member is mounted at the second rail or the seat and faces the slider. When the slider has not been engaged with the lock portion of the third rail, the slider is movable. In this case, in response to the movement of the seat, the actuating member is engaged with the slider and moves the slider along the third rail in the same direction as the movement of the seat.

Further, when the slider has been locked with the third rail, for example at a time of walk-in operation, the actuating member is detachable from the slider. Therefore, even if the slider is fixedly engaged with the third rail, it is not possible for the slider to restrain the movement of the seat. That is, there is no need to worry about loosing a memory function that is actually performed by the slider locked with the lock portion. Still further, damage against the slider and the actuating member, which may be caused by an impact therebetween, is effectively avoided.

As an exemplary structure, the actuating member can be a plate-shaped spring having an engagement portion engageable with the slider. The shape and structure of the plate-shaped spring is not limited specifically. It is preferable that the engagement portion is formed at a tip end of the actuating member.

The engagement portion of the plate-shaped spring is bent to an approximately V-shaped cross section or an approximately ring-shaped cross section. The slider includes an actuated portion engageable with and disengageable from the actuating member. The actuated portion of the slider can be a projection.

The actuating member is firmly attached to the second rail. The slider includes a first inclined portion configured to elastically deform the actuating member when the actuating member makes a contact with the slider engaged with the lock portion.

The actuating member is firmly attached to the second rail. The actuating member includes a first inclined portion elastically deformed when the actuating member makes a contact with the slider engaged with the lock portion of the third rail. In this case,

The actuating member is attached to the second rail. The slider includes an actuated portion facing the actuating member. The actuated portion has a first inclined surface and a second inclined surface which are opposed to each other and are both contactable with the actuating member.

### BRIEF DESCRIPTION OF THE DRAWINGS

The foregoing and additional features and characteristics of the present invention will become more apparent from the following detailed description considered with reference to the accompanying drawings, wherein:

Fig. 1 is a side view illustrating a seat apparatus for use in a vehicle according to embodiments, the seat apparatus as viewed from an inside of a seat;

Fig. 2 is a side view illustrating the seat apparatus as viewed from an outside of the seat;

Fig. 3 is a cross sectional view taken along line III-III in Fig. 2;

Fig. 4 is a cross sectional view taken along line IV-IV in Fig. 2;

Fig. 5 is a cross sectional view taken along line V-V in Fig. 1;

Fig. 6 is a cross sectional view taken along line VI-VI in Fig. 2;

Fig. 7A is a view illustrating a walk-in mechanism before a walk-in operation is performed;

Fig. 7B is a view illustrating the walk-in mechanism operated in a counterclockwise direction;

Fig. 7C is another view illustrating the walk-in mechanism operated in the counterclockwise direction;

Figs. 8A, 8B, 8C and 8D explain a transit of an engagement/disengagement operation of a position memorizing mechanism performed by an engagement lever;

Figs. 9A, 9B and 9C explain a transit of a lock operation between an upper rail and a lower rail according to the embodiments of the present invention;

Fig. 10 is a side view illustrating the upper rail provided with a leaf spring;

Fig. 11 is a side view illustrating a relationship between the leaf spring of the upper rail and a slider according to the first embodiment;

Fig. 12 is another side view illustrating the positional relation between the leaf spring and the slider immediately before the leaf spring makes a contact with the slider according to the first embodiment;

Fig. 13 is a side view illustrating a relationship between the leaf spring of the upper rail and a slider according to the second embodiment, wherein an engagement portion of the leaf spring is in contact with a projection of the slider;

Fig. 14 is a side view illustrating a relationship between the leaf spring of the upper rail and a slider according to the third embodiment, wherein an engagement portion of the leaf spring faces a projection of the slider; and

Fig. 15 is a side view illustrating a relationship between a leaf spring of the lower rail and an actuated portion according to the fourth embodiment, wherein the actuated portion faces the leaf spring.

### DETAILED DESCRIPTION

Embodiments of the present invention will be described below with reference to the attached drawings.

### [First Embodiment]

A seat apparatus 1 according to a first embodiment includes a seat sliding mechanism and a walk-in mechanism. Generally speaking, the walk-in mechanism is operated for the purpose of moving a front seat of a vehicle so as to increase a space for an occupant to get on and off a rear seat of the vehicle. More particularly, when an occupant is about to get on and off a rear seat of the vehicle, a seat back of a front seat is inclined or titled forward. The upper rail is then released from a locked state relative to the lower rail secured to the vehicle floor. As a result, the seat is moved forward and the occupant is able to easily get on and off the rear space. The seat apparatus 1 is further provided with a position memorizing mechanism for memorizing or storing an initial position the front seat. The initial position of the seat corresponds to a relative position (first relative position) between an upper rail and a lower rail. When the seat, which has moved forward, needs to return rearward, a stopper, which is provided at the side of the seat, impacts with the position memorizing mechanism so that the seat returns to the initial position memorized by the position memorizing mechanism.

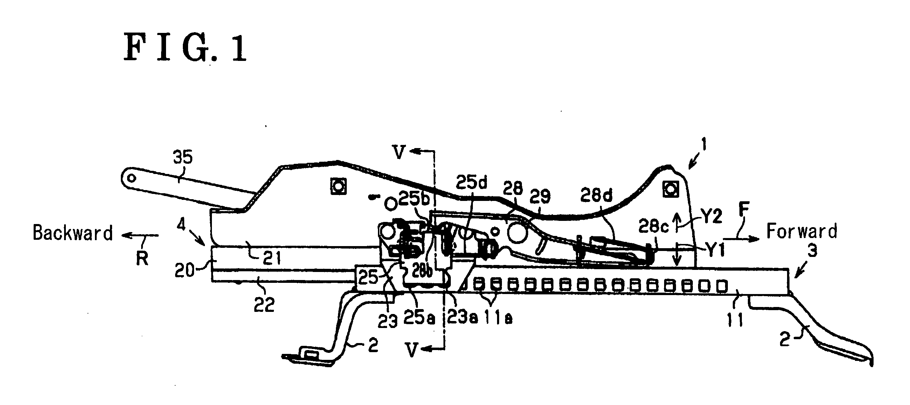

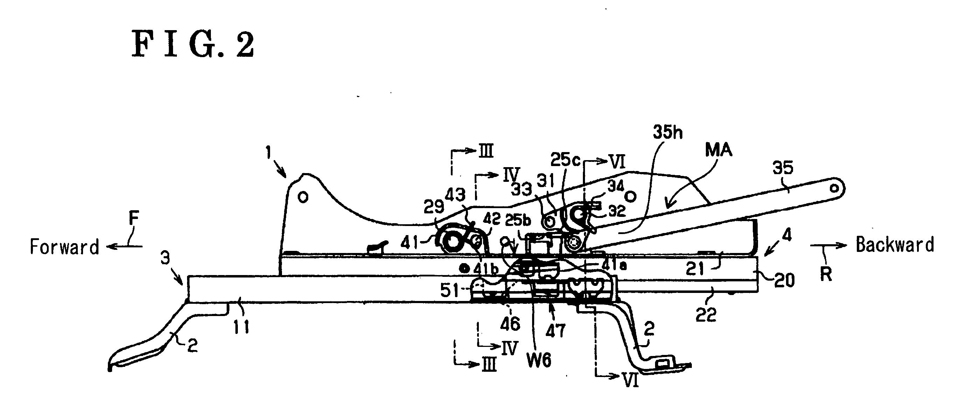

The seat apparatus 1, which is mounted for example on a front seat of a vehicle such as an automobile, is outwardly structured with a pair of frameworks, which are arranged at both lateral sides, The lateral direction corresponds to a perpendicular direction against the drawing sheets of Figs. 1 and 2. Figs. 1 and 2 both illustrate the framework at the left side of the seat apparatus 1 as viewed from the rear of the vehicle. The framework in Fig. 1 is viewed from an inside of the seat, while the framework in Fig. 2 is viewed from an outside thereof. The framework at the right side of the seat apparatus 1 as viewed from the rear exhibits substantially the same structure as the left-side framework, and the description thereof will be omitted herein in order to simplify the description, A position memorizing mechanism, such as a rail 46 (third rail), a slider 47 and so on, is provided at left and right frameworks of the seat apparatus 1. Alternatively, the position memorizing mechanism can be provided at one of the left and right frameworks.

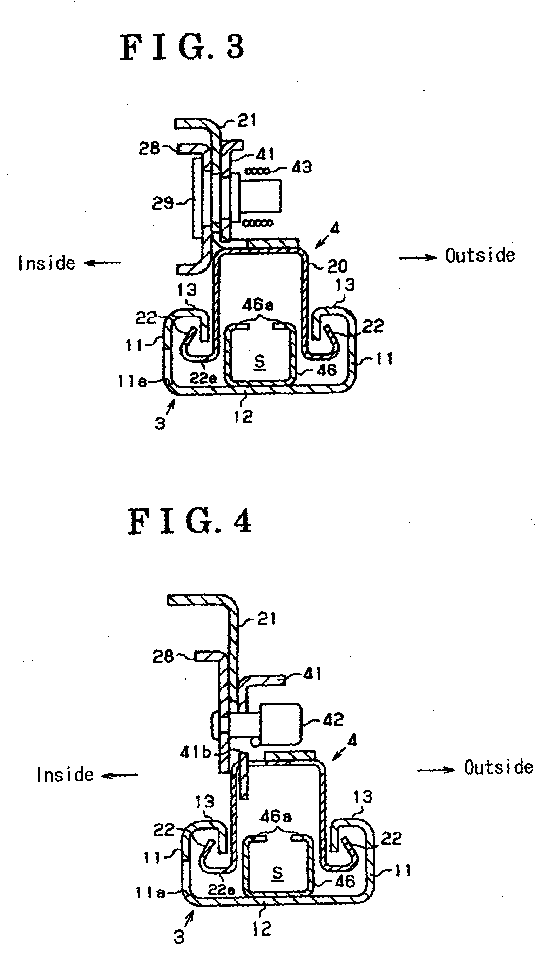

As illustrated in Figs. 1 and 2, a lower rail 3, which serves as a first rail, is secured to a stationary portion of a vehicle, such as a floor of a vehicle, via a pair of brackets 2. The lower rail 3 extends in a longitudinal direction of the vehicle. As illustrated in Fig. 3, the lower rail 3 exhibits an approximately ring-shaped cross section having a pair of sidewalls 11, which are upright from lateral ends of the seat, and a bottom 12 connecting both of the sidewalls 11. Each sidewall 11 is continuously formed, at a tip end, with a first turned wall portion 13 that is bent laterally inwardly and is turned downwardly towards a base end of the sidewall 11. The lower rail 3 hence defines a housing space S inside of the approximately ring-shaped cross section.

An upper rail 4, which serves as a second rail, is fixedly attached to a seat cushion frame (not illustrated) which forms a structure of the seat cushion or the seat. The upper rail 4 extends in the vehicle longitudinal direction and is configured to move with the seat. As illustrated in Fig. 3, the upper rail 4 includes a wall 20, which exhibits an approximately ring shaped cross section and opens downwardly, and a supporting wall 21, which is fixed to an upper surface of the wall 20 and extends vertically. The wall 20 is positioned so as to be interposed in the lateral direction between both of the first turned wall portions 13 of the lower rail 3. The wall 20 is continuously formed, at tip ends (lower ends), with second turned wall portions 22, which are bent laterally outwardly and are turned so as to be surrounded by the sidewalls 11 and the first turned wall portions 13.

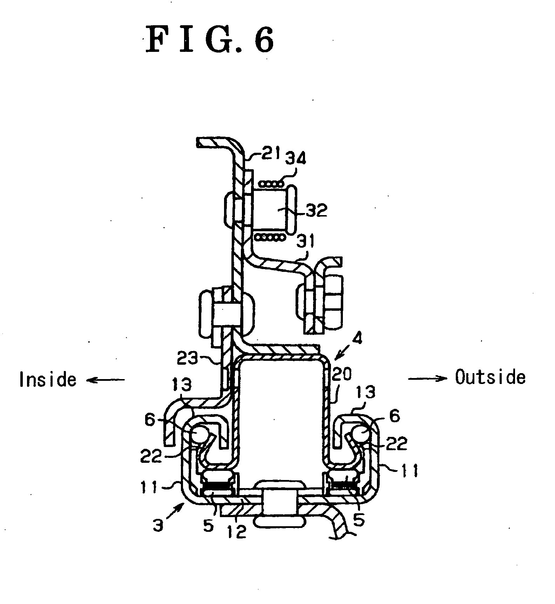

As illustrated in Fig. 6, the upper rail 4 is operatively supported via plural rollers 5 located between the bottom 12 of the lower rail 3 and the upper rail 4. The upper rail 4 is engaged, via balls 6, with the first turned wall portions 13 that face the tip ends of the second turned wall portions 22. Therefore, the upper rail 4 is freely slidably supported relative to the lower rail 3 in the longitudinal direction while the rollers 5 are rolling between the upper rail 4 and the lower rail 3. That is, the upper rail 4 at the side of the seat is movable relative to the lower rail 3, The seat, which is fixedly equipped with the upper rail 4, slides in the longitudinal direction relative to the vehicle floor on which the lower rail 3 is fixedly mounted.

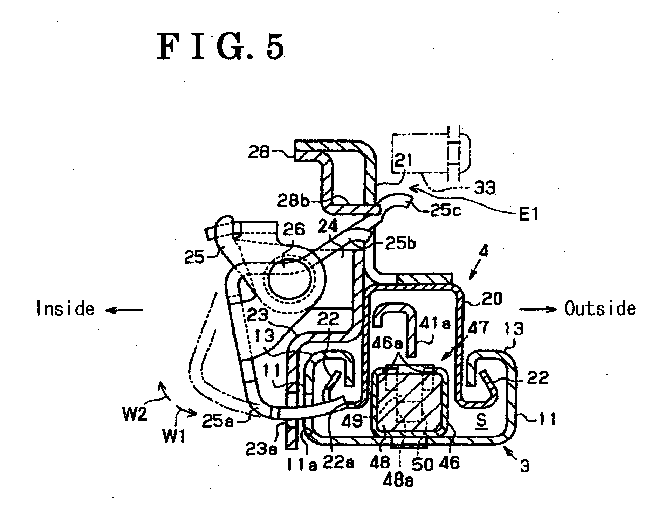

As described above, the lower rail 3 is provided with the sidewalls 11; one is arranged at a laterally inside of the seat, and the other one is arranged at a laterally outside of the seat. As illustrated in Figs. 1 and 5, the sidewall 11, which is mounted at the laterally inside of the seat, is formed with plural lock holes 11a which are longitudinally aligned and are spaced at a predetermined interval to an adjacent one of each. Likewise, the upper rail 4 is provided with the second turned wall portions 22; one is arranged at the laterally inside of the seat, and the other one is arranged at the laterally outside thereof. As illustrated in Figs. 1 and 5, the second turned wall portion 22, which is mounted at the laterally inside of the seat, is formed with plural insertion holes 22a. The insertion holes 22a are arranged so as to mate with the plural adjacent lock holes 11a, for example with the three adjacent lock holes 11a. As further illustrated in Fig. 5, an auxiliary plate 23 is tightly secured to a laterally inner surface of the supporting wall 21. The auxiliary plate 23 is formed with plural through holes 23a which is configured so as to mate with the plural adjacent lock holes 11a, for example the three adjacent lock holes 11a.

The upper rail 4 is secured with a bracket 24 together with the auxiliary plate 23. A slide-position lock plate 25, which serves as a lock member, is pivotally supported by a pivot pin 26. The slide-position lock plate 25 is formed with plural detents 25a, for example with three detents 25a. ' As the slide-position lock plate 25 pivots in a slide movement locking direction, which is denoted with an arrow W1, the detents 25a are inserted into the through holes 23a and the insertion holes 22a. On the other hand, as the slide-position lock plate 25 pivots in a slide-lock releasing direction, which is denoted with an arrow W2, the detents 25a are released from being inserted into the through holes 23a and the insertion holes 22a. The detents 25a are inserted into, and released from the adjacent lock holes 11a (for example three) in association with insertion into, and releasing from the through holes 23a and the insertion holes 22a.

More specifically, as the slide-position lock plate 25 pivots in the slide movement locking direction, which is a counterclockwise direction and the arrow W1 direction in Fig. 5, the detents 25a are inserted into the through holes 23a, the lock holes 11a and the insertion holes 22a, i.e,, are inserted towards the first turned wall portions 13. The upper rail 4 is then locked with the lower rail 3 so that a relative movement between the lower rail 3 and the upper rail 4 are prohibited. The lock holes 11a are then firmly latched with the detents 25a inserted into the through holes 23a and the insertion holes 22a. Therefore, the upper rail 4 is retained at a predetermined position within a relative movement range against the lower rail 3, and so the seat supported by the upper rail 4 is positioned in the longitudinal direction of the vehicle.

The slide-position lock plate 25 is normally biased in the slide movement locking direction by means of a spring 25d (illustrated in Fig. 1) installed to the pivot pin 26. The detents 25a of the slide-position lock plate 25 are typically biased to pivot in a direction to be inserted into the lock holes 11a, i.e., in the slide movement locking direction denoted by the arrow W1 in Fig. 5. As is apparent from Fig. 5, a contact flange 25b is formed at the slide-position lock plate 25, the contact flange 25b which faces the detents 25a relative to the pivot pin 26.

Going back to Fig. 1, a slide lock-releasing lever 28, which serves as an operating member, is tightly secured to the laterally inner surface of the supporting wall 21 of the upper rail 4. The slide lock-releasing lever 28 is pivotably supported by a pin 29 at an approximately longitudinally central portion thereof. As is obvious from Fig. 5, a contact flange 28b is formed at a rear end of the slide lock-releasing lever 28. The contact flange 28b is arranged so as to face and make a contact with the contact flange 25b of the slide-position lock plate 25. A supporting portion 28c is formed at a front end of the slide lock-releasing lever 28. The supporting portion 28c of the slide lock releasing lever 28 supports an operation handle (not illustrated) operated by an operator. As the slide lock-releasing lever 28 is pivoted about the pin 29 in response to an operation of the operation handle, the contact flange 28b of the slide lock-releasing lever 28 comes in contact with the contact flange 25b of the slide-position lock plate 25. As a result, the slide-position lock plate 25 is pivoted in the slide-lock releasing direction, i.e., in a clockwise direction in Fig. 5 denoted with an arrow W2 in Fig. 5, against a biasing force of the spring 25d. The engagement of the detents 25a and the lock holes 11a are released, and the upper rail 4 is released from the locked state. Therefore, the upper rail 4 is slidably movable along the lower rail 3.

The slide-position lock plate 25 is further formed with a contact flange 25c. The contact flange 25c faces the detents 25a relative to the pivot pin 26. As is apparent from Fig. 5, the contact flange 25c extends through the supporting wall 21 of the upper rail 4 and protrudes laterally outwardly.

A spring 28d (illustrated in Fig. 1) typically biases the slide lock-releasing lever 28 to pivot in a direction denoted with an arrow Y1. The contact flange 28b is hence biased to go away from the contact flange 25b. Once an operator operates the operation handle, the slide lock-releasing lever 28 is pivoted about the pin 29 in a direction denoted with an arrow Y2 (see Fig. 1) against the biasing force of the spring 28d. The slide lock-releasing lever 28 then releases an engagement of the detents 25a and the lock holes 11a. The upper rail 4 is hence released from the locked state and is slidably movable relative to the lower rail 3. The seat is slidably moved in this condition and a position thereof is adjusted with high precision.

As illustrated in Fig. 2, a walk-in mechanism MA of the seat apparatus 1 includes: a rod 35 operated in response to a forward tilting of the seat back; and a release lever 31. The release lever 31 serves as a releasing member which releases a slide lock in response to a forward tilting of a seatback. The seat back faces a back of an occupant to be seated on a seat cushion. The release lever 31 is supported at a laterally outer surface of the supporting wall 21 of the upper rail 4 so as to pivot about a pin 32, A contact pin 33 (see Fig. 2) is firmly attached to a tip end of the release lever 31. The contact pin 33 is configured to function to release a slide dock and is arranged so as to face and come in contact with the contact flange 25c of the slide-position lock plate 25, as illustrated in Fig. 5. The release lever 31 is typically biased by a spring 34 (torsion coil spring) installed on the pin 32 so as to move the contact pin 33 away from the contact flange 25c, i.e., in a clockwise direction in Fig. 2. As a result, a space E1 (see Fig. 5) is defined between the contact pin 33 and the contact flange 25c.

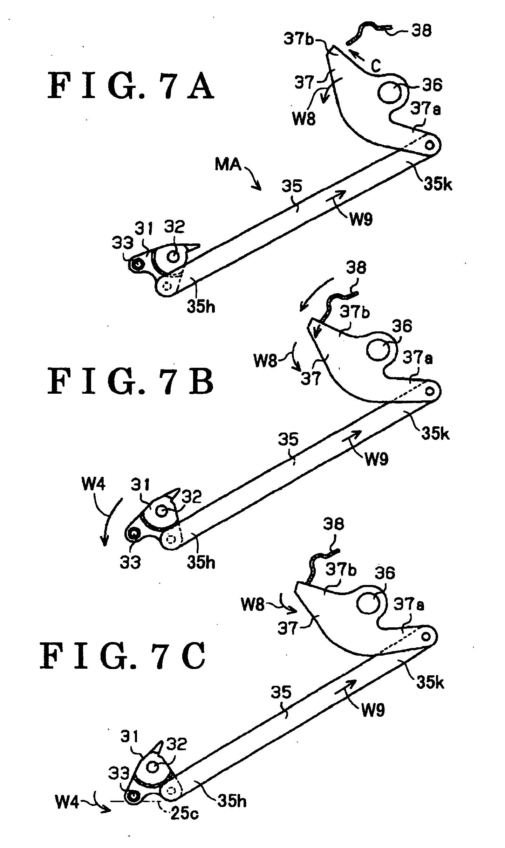

Described below is the walk-in mechanism MA. As illustrated in Fig. 7, one end 35h of the rod 35 is freely pivotably connected to a tip end of the release lever 31. The other end 35k of the rod 35 is freely pivotably connected to a lever portion 37a of a reclining plate 37 which is freely pivotably supported by the seat cushion frame (not illustrated) by a pin 36. An axis of the pin 36 corresponds to a turning axis of the seat back relative to the seat cushion. The reclining plate 37 is formed with an engagement portion 37b extending towards the seat cushion. The engagement portion 37b is arranged to face an engagement portion 38 fixed to the seat back frame of the seat back. As the seat back frame turns relative to the seat cushion frame about the pin 36, the engagement portion 38 pushes the engagement portion 37b.

Figs. 7A, 7B and 7C explains a walle-ia operation. When the walk-in mechanism MA is positioned as illustrated in Fig. 7A, the seat back is retained at an tilting angle in which an occupant can be seated on the seat cushion. Here, a clearance C is maintained between the engagement portions 37b and 38 so as not to interfere each other. Figs. 7B and 7C each illustrate a state in which the seat back was pivoted in the slide lock releasing direction, i.e., in a counter clockwise direction in Fig. 7. In this case, the seat back has inclined forward beyond a predetermined angle, and the engagement portion 38 pushes the engagement portion 37b. As a result, the reclining plate 37 is pivoted in the slide lock releasing direction, which is the counterclockwise direction (arrow W8) in Fig. 7, in association with the operation between the engagement portions 37b and 38. The reclining plate 37 then pulls the rod 35 in the slide lock releasing direction, which corresponds to an arrow W9 direction, via the lever portion 37a. As a result, the release lever 31 is pivoted about the pin 32 against the biasing force of the spring 34 in the slide lock releasing direction, which corresponds to the counterclockwise direction (arrow W4) in Fig. 7. As is easily seen from Fig. 5, the contact pin 33 of the release lever 31 pushes the contact flange 25c of the slide-position lock plate 25 so that the slide-position lock plate 25 is pivoted in a slide-lock releasing direction denoted with an arrow W2.

As described above, once the release lever 31 turns about the pin 32 in response to a tilting of the seat back beyond the predetermined angle, the contact flange 25c impacts with the contact pin 33. As a result, the release lever 31 rotates the slide-position lock plate 25 in the slide-lock releasing direction, which is denoted with the arrow W2 in Fig. 5. The detents 25a are hence released from being engaged with the lock holes 11a. In such a manner, the so-called walk-in mechanism MA is configured with the release lever 31 and the rod 35 and so on, which release the slide lock in association with seat back tilted beyond the predetermined angle.

Described below is a structure around the position memorizing mechanism. As illustrated in Figs. 3, 4 and 5, the housing space S is defined at the bottom 12 of the lower rail 3. The rail 46 is fixedly secured inside the housing space S and is securely mounted on the vehicle floor via the lower rail 3. The rail 46 exhibits an approximately ring-shaped cross section with opening ends turned laterally inwardly. The rail 46 is positioned to be coaxial with the lower rail 3 and extends along the longitudinal direction of the lower rail 3. That is, the rail 46 extends along the longitudinal direction of the vehicle. As illustrated in Fig. 5, hole-shaped lock portions 46a are formed at both ends of the rail 46. The plural lock portions 46a are in series spaced at a predetermined interval along the longitudinal direction of the rail 46. The predetermined interval between the adjacent lock portions 46a is the same as the one of the adjacent lock holes 11a.

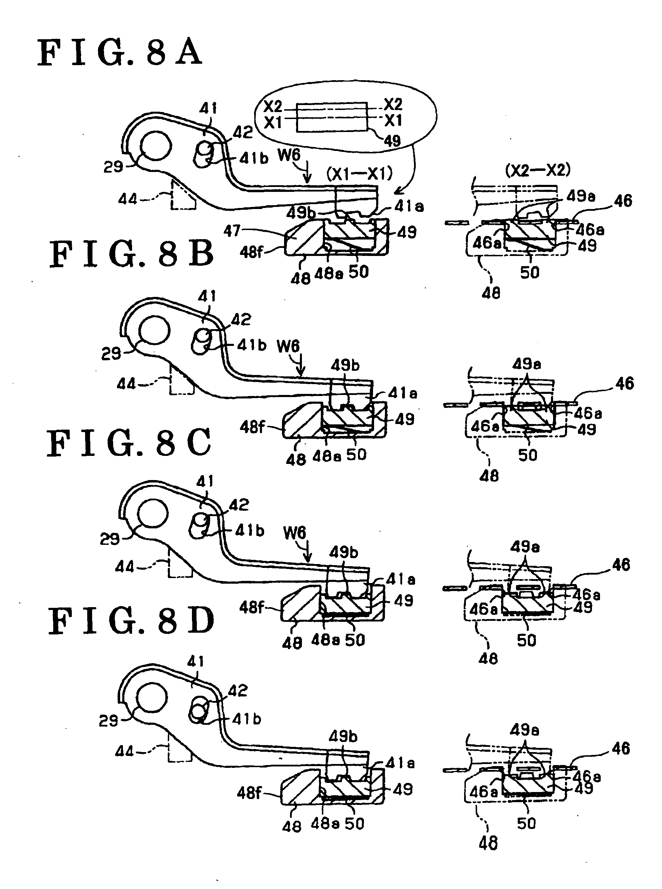

As illustrated in Fig. 5, a slider 47 is movably provided inside of the rail 46. The slider 47 is accommodated inside the housing space S with the rail 46. As we can see from Fig. 8, the slider 47 includes: a slider body 48; and an engagement member 49 housed in a recessed portion 48a of the slider body 48. The slider body 48 includes an outer wall surface corresponding to an inner wall surface of the rail 46 and is slidably movable along the rail 46. The recessed portion 48a is open upwardly. A spring 50 is mounted between an under surface of the engagement member 49 and a bottom surface of the recessed portion 48a. The spring 50 biases the engagement member 49 to project upwardly, i.e., in an opposite direction to an arrow W6 in Fig. 8, i.e., in a direction for an engagement. That is, the spring 50 typically acts to engage the slider 47 with the lock portions 46a of the rail 46 such that an engaged state is established by the slider 47 engaged with the lock portions 46a of the rail 46. In this case, the slider 47 effectively memorizes the initial position (first relative position) of the seat.

As is obvious from Fig. 8, the engagement member 49 is embedded with plural fitting strips 49a, e.g., two fitting strips 49a. The fitting strips 49a are engageable with and disengageable from the lock portions 46a of the rail 46. The fitting strips 49a are arranged at both lateral sides of the seat. The engagement member 49 is biased in the engagement direction by the spring 50 so that the fitting strips 49a are fitted into the lock portions 46a. As a result, the slider 47 is locked and secured against the rail 46. A longitudinal position of the slider 47 that has been locked is referred to as a memorized position (first relative position) of the seat so that the seat or the upper rail 4 returns, as needed, to the memorized position of the seat.

As is further illustrated in Fig. 8, the engagement member 49 is provided with a locking piece 49b that is movable. The upper rail 4 is fixed with a stopper 51 (see Fig. 2). The stopper 51 faces a stopper surface 48f of the slider body 48 and is contactable with the stopper surface 48f. Therefore, as the upper rail 4 (seat) is moved rearward, i.e., in the arrow R direction in Fig. 2 in a state where the slider 47 has been locked with the lock portions 46a, the stopper 51 at the side of the upper rail 4 impacts with the stopper surface 48f of the slider 47. Here, because the slider 47 has been locked with the lock portions 46a, the upper rail 4 (seat) reliably returns to a position that the slider 47 currently stores therein or memorizes. That is, the slider 47 acts as a memory function for memorizing a position of the seat.

As illustrated in Figs. 2 and 3, an engagement lever 41 is provided at a laterally outer surface of the supporting wall 21 of the upper rail 4. The engagement lever 41 cancels the memory function for memorizing a seat position by the slider 47. The engagement lever 41 is supported by the upper rail 4 so as to freely pivot about the pin 29. The engagement lever 41 is connected to the slide lock-releasing lever 28 and is operatively associated with the slide lock-releasing lever 28. As illustrated in Fig. 8, an engagement portion 41a is fixedly provided at a longitudinally rear end of the engagement lever 41. The engagement portion 41a extends through the wall 20 of the upper rail 4 and is positioned above the lower rail 3.

As is apparent from Fig. 8, a long hole 41b is formed at a longitudinally intermediate of the engagement lever 41 and extends in a circumferential direction about the pin 29. Meanwhile, as is apparent from Figs. 2 and 4, the slide lock releasing lever 28 is firmly equipped with an engagement pin 42. The engagement pin 42 extends through the supporting wall 21 of the upper rail 4 and is inserted into the long hole 41b. Therefore, a relative pivot-movement range of the slide lock releasing lever 28 and the engagement lever 41 is determined by a movement range of the engagement pin 42 inside the long hole 41b.

A spring 43 is installed to the pin 29 and typically biases the engagement lever 41 in a way that the engagement portion 41a of the engagement lever 41 approaches the lower rail 3 (a clockwise direction in Fig. 2, an arrow W6 direction). More particularly, one end of the spring 43 is fixed to the engagement lever 41 and the other end thereof is fixed to the engagement pin 42. This spring 43 biases in a way that the engagement pin 42 impacts with an inner wall surface at one circumferential side (counterclockwise side in Fig. 8) of the long hole 41b. That is, the engagement lever 41 is biased to rotate in a manner that the engagement portion 41a approaches the lower rail 3. Therefore, the engagement portion 41a is detachably engaged with the engagement pin 42.

As further illustrated in Fig. 8, the upper rail 4 is provided with a restriction wall 44 as a restricting member. As the engagement lever 41 pivots beyond a predetermined angle in the arrow W6 direction in Fig. 8, the engagement lever 41 impacts with the restriction wall 44. As a result, the restriction wall 44 restricts a further rotation of the engagement lever 41 beyond the predetermined rotation angle.

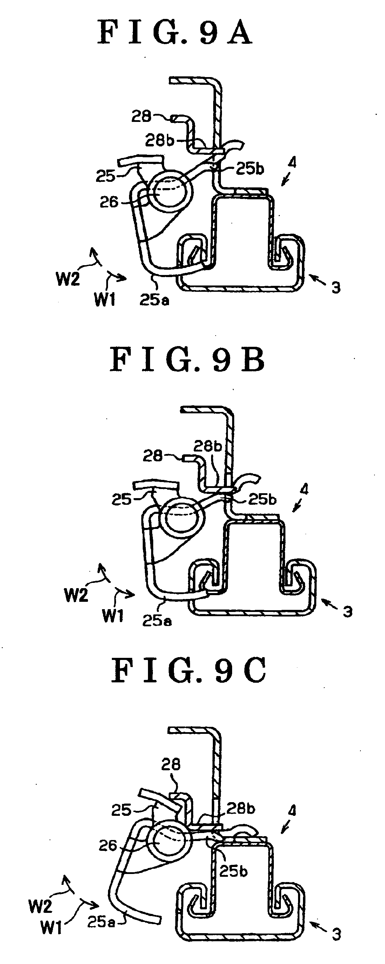

Here, the engagement lever 41 is operated in association with the slide lock releasing lever 28. Therefore, once an operator operates an operation handle (not illustrated), the slide lock releasing lever 28 is rotated in the slide lock releasing direction, and at the same time, the engagement lever 41 is rotated in a direction for canceling a memory, i.e., in a direction for disengaging the slider 47 from the rail 46. Therefore, as illustrated in Figs. 8A, 8B and 8C, until a pivot movement of the engagement lever 41 is restrained by the restriction wall 44, the engagement lever 41 pivots in association with the slide lock releasing lever 28 while the engagement pin 42 is impacting with the inner wall surface of the long hole 41b. At operation stages illustrated in Figs. 9A and 9B, in response to the rotation of the slide lock releasing lever 28, the contact flange 25b impacts with the contact flange 28b, and the slide-position lock plate 25 is pivoted in a clockwise direction in Fig. 9 denoted with the arrow W2. Here, the detents 25a have been still locked with the lock holes 11a.

As illustrated in Fig. 8A, the engagement portion 41a of the engagement lever 41 connected to the upper rail 4 faces the locking piece 49b of the engagement member 49 of the slider 47 so as to be engaged therewith. That is, the engagement portion 41a of the engagement lever 41 is located an a position appropriate for pushing the engagement member 49. As illustrated in Figs. 8B and 8C, as the slide lock releasing lever 28 is rotated in response to an operation of an operation handle by an operator, the engagement lever 41 is pivoted in the memory canceling direction, i.e., in the clockwise direction in Fig. 8 denoted with the arrow W6. In this case, the engagement portion 41a of the engagement lever 41 pushes the engagement member 49 downwardly (the arrow W6) for disengagement against the biasing force of the spring 50. The fitting strips 49a, which has been fitted into the lock portions 46a of the rail 46, are detached from the lock portions 46a so that the slider 47 is released from the locked state against the rail 46. That is, a restraining for a relative movement of the slider 47 against the rail 46 is canceled or released.

According to the first embodiment of the present invention, in a state where the upper rail 4 is locked with the lower rail 3 by the slide-position lock plate 25, the slider 47 is normally fitted into the lock portions 46a and is locked by the rail 46. The slider 47 is hence restrained from moving relative to the rail 46. Once the engagement lever 41 is pivoted in the arrow W6 direction in response to an operation by an operator, the engagement portion 41a of the engagement lever 41 lifts down the engagement member 49 in the disengagement direction denoted with the arrow W6 in Fig. 8. Therefore, the slider 47 is disengaged from the lock portions 46a and becomes movable relative to the rail 46. Here, a position, which had been memorized by the slider 47, is canceled. At this point, the engagement portion 41a of the engagement lever 41 has been engaged with the engagement member 49 of the slider 47. Therefore, once the upper rail 4 (seat) is moved back and forth with the engagement lever 41, the slider 47 is also moved along the rail 46 in association with the engagement lever 41.

Fig. 8D illustrates a state in which the pivot-movement of the engagement lever 41 is restrained by the restriction wall 44. In this case, as illustrated in Fig. 9C, the slide lock releasing lever 28 allows the slide-position lock plate 25 to rotate in the slide-lock releasing direction denoted with the arrow W2, and so the engagement between the detents 25a and the lock holes 11a are released.

That is, as a result that the engagement lever 41 is pivoted about the pin 29 until the engagement pin 42 impacts with the inner wall surface of the long hole 41b, the slide lock releasing lever 28 allows the engagement between the detents 25a and the lock holes 11a to be released. Therefore, a release stroke of the slide lock-releasing lever 28 for releasing the lock is determined by an impact between the engagement pin 42 and the long hole 41b.

As described above, at a normal operation, the slide lock releasing lever 28 and the engagement lever 41 are both operated in response to operation of an operation handle (not illustrated) by an operator. That is, in response to an operation of the slide lock releasing lever 28, the lock between the lower rail 3 and the upper rail 4 is released, and a relative movement between the lower rail 3 and the upper rail 4 is enabled. Further, in response to an operation of the engagement lever 41, the slider 47 is unlocked from the lock portions 46a. Therefore, once the upper rail 4 (seat) is moved back and forth, the slider 47. is slidably moved along the rail 46 with the upper rail 4. This is because the movable locking piece 49b of the engagement member 49 of the slider 47 has been engaged with the engagement portion 41a of the engagement lever 41. Therefore, the slider 47 is effectively moved relative to the rail 46 integrally with the upper rail 4 and the seat in the same direction.

Meanwhile, at a walk-in operation, an operator tilts the seat back forward beyond a predetermined angle. In this case, the slide lock-releasing lever 28 is not operated. As described above, the release lever 31 of the walk-in mechanism MA is pivoted in a seat lock releasing direction denoted with an arrow W4 in Fig. 7, and so the locking between the lower rail 3 and the upper rail 4 is discontinued. Accordingly, a relative movement between the lower rail 3 and the upper rail 4 is enabled. At a time of the walk-in operation, the slide lock releasing lever 28 and the engagement lever 41 are not rotated. The slider 47 remains locked with the lock portions 46a and fixed with the rail 46. A relative movement of the slider 47 against the rail 46 is hence prohibited. Therefore, at the time of the walk-in operation, the slider 47 acts as the memory function for memorizing a position of the seat, i.e., a relative position between the lower rail 3 and the upper rail 4.

At the time of the walk-in operation, the seat, which was moved forward, i.e., in a direction for increasing a space for an occupant to get on and off, is returned backward, i.e., in the arrow R direction. In this case, the upper rail 4 (seat) is moved rearward (the arrow R) until the stopper 51 of the upper rail 4 impacts with the stopper surface 48f of the slider 47. Therefore, a position of the seat, i.e., a relative position between the lower rail 3 and the upper rail 4, reliably returns to the initial position where the upper rail 4 was located prior to the forward movement of the seat. The engagement portion 41a of the engagement lever 41 pushes the engagement member 49 of the slider 47 and returns to a position to be engaged.

The following effects are obtained according to the first embodiment as described above.

According to the first embodiment of the present invention, once an operator operates the slide lock-releasing lever 28 (operating member), the lower rail 3 and the upper rail 4 are actuated to be unlocked from each other. A relative movement of the lower rail 3 (vehicle floor) against the upper rail 4 (seat) is released from being restrained such as the seat becomes movable in the longitudinal direction of the vehicle. In such circumstances, the engagement lever 41 is engaged with the slider 47, and the slider 47 is moved integrally with the upper rail 4 (seat) in the same direction. That is, the slider 47 is movable at the same distance as a traveling distance of the upper rail 4 (seat). Once the operation the slide lock-releasing lever 28 (operating member) is stopped, the slide-position lock plate 25 locks the lower rail 3 and the upper rail 4 so that a relative movement' between the lower rail 3 and the upper rail 4 is prohibited. In this case, the slider 47 is locked with the rail 46.

Meanwhile, at the walk-in operation, once the operator inclines the seat back beyond the predetermined angle, the rod 35 and the release lever 31 are operated in association with the inclination of the seat back. The lower rail 3 (vehicle floor) and the upper rail 4 (seat) are released from the locked state established by the slide-position lock plate 25, and the seat becomes movable. The slider 47 however remains locked with the rail 46.

As described above, according to the first embodiment, the slider 47 is effectively switched between the engaged state and a disengaged state in accordance with a dual system between an operation for inclining the seat back and an operation of the slide lock releasing lever 28. Therefore, operability for adjusting a position of the seat is effectively improved. Here, when the slider 47 is at the engaged state, the position of the seat is memorized. On the other hand, when the slider 47 is at the disengaged state, the position of the seat is canceled.

Further, the rail 46 and the slider 47 are housed in the housing space S defined inside a cross section of the lower rail 3. There is no need to arrange components outside of the rail cross section, which leads to a downsizing of the seat apparatus. Still further, because components are not needed to expose outside of the seat apparatus, the components of the seat apparatus is effectively isolated from interference with other components. Still further, the slide lock-releasing lever 28 is arranged coaxially with the engagement lever 41 so that a linkage therebetween is simplified.

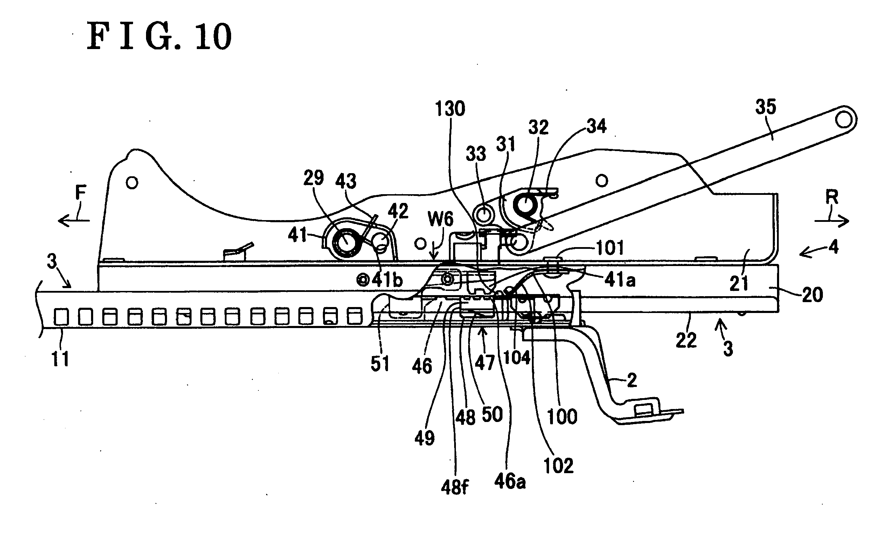

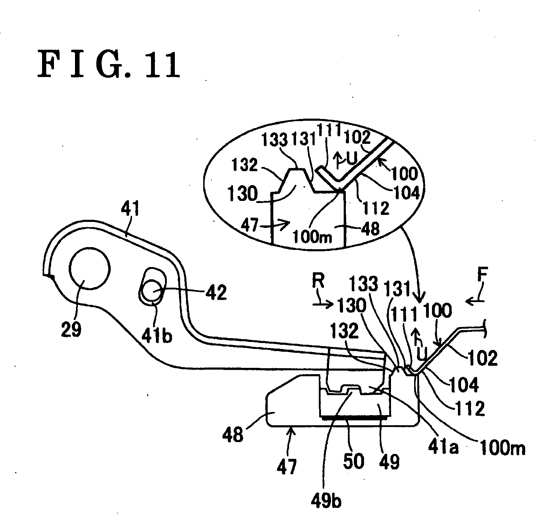

As illustrated in Fig.10, a leaf spring 100 (a spring member of plate-shaped), which serves as an actuating member, is fixedly attached to the side of the upper rail 4 by a fixture 101 and extending towards the lower rail 3. As illustrated in Fig. 11, the leaf spring 100 is made of a spring material and is provided to be elastically deformed. The leaf spring 100 includes: an extending portion 102 extending towards the slider 47 in a downwardly inclined direction from the upper rail 4; and an engagement portion 104 formed by bending a tip end of the extending portion 102. The engagement portion 104 can exhibit an approximately V-shaped cross section. In this case, as is obvious from Fig. 11, the V-shaped engagement portion 104 is configured with: a bottom 100m; a first inclined portion 111, which extends from the bottom 100m and inclines in a left-upwardly inclined direction and a second inclined portion 112, which extends from the bottom 100m and inclines in a right-upwardly inclined direction. The leaf spring 100 possesses characteristics in which flexibility in a thickness direction can be increased but rigidity in a width direction is high.

As further illustrated in Fig. 11, the slider body 48 of the slider 47 is provided or formed with a projection 130 at an upper surface of the slider 47, i.e., at a surface of the slider 47 facing the upper rail 4. The projection 130 serves as an actuated portion and is engaged with and disengaged from the engagement portion 104 at a tip end of the leaf spring 100. The projection 130 closely faces the engagement portion 104 of the leaf spring 100 with an interval therebetween. When viewed from the above, the slider 47 and the engagement portion 104 of the leaf spring 100 partially overlap each other. The projection 130 is formed to an approximately reverse V-shaped cross section with a first inclined surface 131, a second inclined surface 132 and a top surface 133 between the first inclined surface 131 and the second inclined surface 132.

As the upper rail 4 or the seat, which is positioned at the rear of the slider 47, is slidably moved in a direction for increasing a rear space for a walk-in operation, i.e., in a direction denoted with an arrow F, in a situation where the slider 47 has not been locked and is movable, the first inclined portion 111 of the engagement portion 104 of the leaf spring 100 pushes the first inclined surface 131 of the projection 130 of the slider 47. Therefore, once the upper rail 4 or the seat is moved in the direction denoted with the arrow F, i.e., in the forward direction of the vehicle, the slider 47 is moved in the same direction.

As described above, when an operator or user stops operating an operational handle (not illustrated) and a sliding movement of the seat or the upper rail 4 is terminated under the normal seat sliding operation, the detents 25a are occasionally located not at the positions corresponding to the lock holes 11a but between the adjacent lock holes 11a. In this case, the upper rail 4 or the seat is not locked and is movable. Further, the slider 47 is not locked with the lock portions 46a of the rail 46, Still further, once the operator stops operating the operational handle, the engagement portion 41a of the engagement lever 41 is occasionally not engaged sufficiently with the locking piece 49b of the slider 47. In such circumstances, if the leaf spring 100 is not provided when the upper rail 4 or the seat is moved in the direction denoted with the arrow F, i.e., in the forward direction of the vehicle, the upper rail 4 or the seat is moved, but it is not possible to move the slider 47 in the same direction. This may cause the slider 47 to position erroneously relative to the detents 25a.

In the light of the forgoing, according to the first embodiment of the present invention, the leaf spring 100 is provided at a position of the upper rail 4 (seat) facing the slider 47. In favor of this structure, when the seat (upper rail 4) is moved in the direction denoted with the arrow F, the engagement portion 104 of the leaf spring 100 is engaged with, or makes a contact with the first inclined surface 131 of the projection 130 of the slider 47 such that the engagement portion 104 pushes the slider 47. The slider 47 is hence moved along the rail 46 in the same direction as the seat (upper rail 4), wherein the slider 47 is operatively associated with the seat (upper rail 4). Therefore, the slider 47 is effectively prevented from being positioned erroneously relative to the detents 25a.

Meanwhile, on the condition where the slider 47 is locked with or engaged with the rail 46, such as when the walk-in operation is implemented, as the seat (upper rail 4) is moved in the direction denoted with the arrow F, i.e., in the direction for increasing the rear space, the first inclined portion 111 of the engagement portion 104 of the leaf spring 100 impacts with the first inclined surface 131 of the projection 130 of the slider 47. Here, because the slider 47 is fixedly locked with or engaged with the lock portions 46a, the leaf spring 100 is elastically deformed upwardly, i.e., in a direction denoted with an arrow U in Fig. 11, in a manner that the engagement portion 104 of the leaf spring 100 runs over the projection 130 of the slider 47. Accordingly, even if the engagement portion 104 of the leaf spring 100 impacts with the projection 130, the leaf spring 100 is easily released from the projection 130.

That is, the first inclined surface 131 of the slider 47 and the first inclined portion 111 of the leaf spring 100 are both inclined in a direction for disengaging the engagement portion 104 of the leaf spring 100 from the projection 130 of the slider 47. As a result, both of the leaf spring 100 and the slider 47 are prevented from being damaged. As described above, because the engagement portion 104 of the leaf spring 100 runs over the projection 130 of the slider 47 and is disengaged therefrom, the seat (upper rail 4) is effectively moved forward, i.e., in the F direction, with the slider 47 being locked at the memory lock position (first position).

If a rigid stopper is provided at the upper rail 4 in substitution for the elastically deformable leaf spring 100, the rigid stopper impacts with the projection 130 of the slider 47. In this case, the seat (upper rail 4) is not further moved in the F direction, i.e., in the direction for increasing the rear space such that the walk-in operation is not allowed.

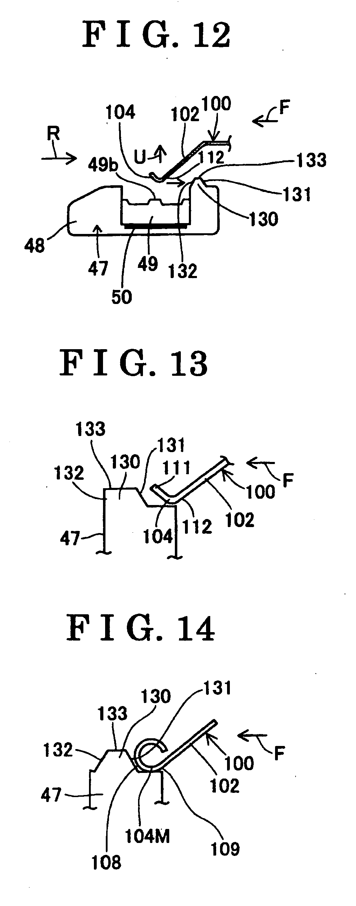

After the operator or user has gat off the vehicle during the walk-in operation, the seat (upper rail 4), which has been moved forward, is moved backward (the R direction) so as to return to the initial position (first relative position). In this case, as illustrated in Fig. 12, the second inclined portion 112 of the engagement portion 104 of the leaf spring 100 is engaged with or makes a contact with the second inclined surface 132 of the projection 130 of the slider 47. Here, because the slider 47 has been fixedly locked, the leaf spring 100 is elastically deformed upwardly, i.e., in the U direction. The engagement portion 104 of the leaf spring 100 is hence easily released from the projection 130 of the slider 47 and runs over the projection 130. As described above, the second inclined surface 132 of the slider 47 and the second inclined portion 112 of the leaf spring 100 are inclined in a direction for releasing the engagement portion 104 of the leaf spring 100 from the projection 130 of the slider 47.
As described above, likewise as performing the walk-in operation, as far as the slider 47 is fixedly locked, the engagement portion 104 of the leaf spring 100 is easily released from the projection 130 of the slider 47. Therefore, the leaf spring 100 and the projection 130 are both prevented from an impact so that they are not damaged.

### [Second Embodiment]

Fig. 13 illustrates a second embodiment. The second embodiment brings substantially the same effects and functions as the first embodiment. As illustrated in Fig. 13, the projection 130 of the slider 47 exhibits an approximately mountain-like shape with a first inclined surface 131, a second inclined surface 132 and a top surface 133 formed between the first inclined surface 131 and the second inclined surface 132. The first inclined surface 131 is inclined in the same manner as the first embodiment. The second inclined surface 132 stands upright, which is different from the first embodiment.

### [Third Embodiment]

Fig. 14 illustrates a third embodiment. The third embodiment brings substantially the same effects and functions as the first embodiment. As illustrated in Fig. 14, a leaf spring 100 is made of a spring material and is elastically deformable. The leaf spring 100 includes an extending portion 102 extending towards the slider 47 in a downwardly inclined direction, and a ring-shaped engagement portion 104M formed by bending a tip end of the extending portion 102. The engagement portion 104M includes inclined portions 108 and 109 which face each other. When the leaf spring 100 impacts with the projection 130 of the slider 47, the inclined portions 108 and 109 contribute to an upward elastic deformation of the leaf spring 100.

### [Fourth Embodiment]

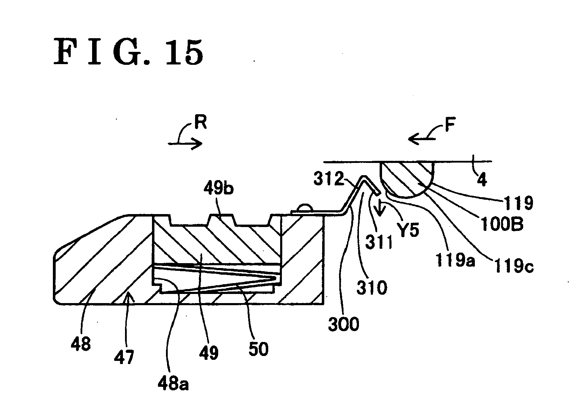

Fig. 15 illustrates a fourth embodiment. The fourth embodiment brings substantially the same effects and functions as the first embodiment. As is illustrated in Fig. 15, a projection 100B is fixedly attached to the upper rail 4 side. The projection 100B serves as the actuated portion and includes an outer wall surface 119 exhibiting a half-circle shape. The outer wall surface 119 includes a first inclined surface 119a facing a leaf spring 300, and a second inclined surface 119c, The slider 47 is provided with the leaf spring 300 serving as the actuating member. The leaf spring 300 is engageable with or can contact with the projection 100B when it is positioned close to the projection 100B. The leaf spring 300 is formed, at a tip end, with an approximately reverse V-shaped portion 310 (engagement portion). The reverse V-shaped portion 310 of the leaf spring 300 can face the projection 100B firmly attached to the upper rail 4 side. The reverse V-shaped portion 310 of the leaf spring 300 includes a first inclined portion 311 and a second inclined portion 312. The leaf spring 300 is elastically deformable downwardly, i.e., in a direction denoted with an arrow Y5.

According to the fourth embodiment of the present invention, once the upper rail 4 is moved in the F direction in a condition where the slider 47 is locked with or engaged with the rail 46, the first inclined surface 119a of the projection 100B of the upper rail 4 contacts with the first inclined portion 311 of the reverse V-shaped portion 310 of the leaf spring 300. The leaf spring 300 is then elastically deformed in a disengagement direction, i.e., in a direction denoted with an arrow Y5. The projection 100B can run over the reverse V-shaped portion 310 of the leaf spring 300. As a result, the projection 100B of the upper rail 4 is moved forward with the slider 47 left at the memory lock position. When the projection 100B is returned backward (the R direction) after the movement of the projection 100B to the front of the leaf spring 300, the second inclined surface 119c of the projection 100B impacts with the second inclined portion 312 of the leaf spring 300. The leaf spring 300 is elastically deformed in the disengagement direction, i.e., in the Y5 direction. Therefore, the projection 100B runs over the reverse V-shaped portion 310 of the leaf spring 300.

On the other hand, once the upper rail 4 is moved in the F direction in a condition where the slider 47 has not been locked with the rail 46 and is movable, the projection 100B of the upper rail 4 pushes the first inclined portion 311 of the reverse V-shaped portion 310 of the leaf spring 300. Therefore, the slider 47 moves in association with the movement of the upper rail 4 in the same direction as the upper rail 4.

The present invention are not limited to the above-described embodiments, which are illustrated in the attached drawing figures. For example, the seat apparatus 1 can be provided for three sets of lower rail and upper rail. Further, on the assumption that strength and stability of the seat apparatus 1 are assured at a sufficient level, the seat apparatus 1 can be provided for a single set of lower rail and upper rail. Further, according to the above embodiments, the movement direction of the seat in response to the relative movement between the lower rail and the upper rail corresponds to the longitudinal direction of the vehicle. However, the movement direction of the seat can be the lateral direction of the vehicle. Still further, according to the above embodiments, a front seat of a vehicle is moved forward at a time of walk-in operation. The front seat can be a driver's seat or a passenger's seat. Further, although the front seat is moved forward at a time of walk-in operation, a rear seat can be moved rearward so as to increase a rear space for an occupant to get on and off.

The principles, of the preferred embodiment and mode of operation of the present invention have been described in the foregoing specification. However, the invention, which is intended to be protected, is not to be construed as limited to the particular embodiment disclosed. Further, the embodiment described herein are to be regarded as illustrative rather than restrictive. Variations and changes may be made by others, and equivalents employed, without departing from the scope of the present invention. Accordingly, it is expressly intended that all such variations, changes and equivalents that fall within the scope of the present invention as defined in the claims, be embraced thereby.
A seat apparatus includes position memorizing mechanism (46,47) includes: a third rail (46) arranged along a first rail (3) and having a lock portion (46a); and a slider (47) slidably moved along the rail (46) and engaged with and disengaged from the lock portion (46a) of the rail (46). The seat apparatus further includes: an actuating member (100) provided at one of a second rail (4) and the slider (47) and facing the other one thereof. The actuating member (100) actuates the slider (47) to move along the rail (46) in response to a movement of the second rail when the slider (47) is at a disengaged state with the lock portion (46a) and to retain at a first position when the slider (47) is at an engaged state with the lock portion (46a).

## Claims

1. A seat apparatus for a vehicle, comprising:
a first rail (3) suitable to be secured to a stationary portion of the vehicle;
a second rail (4) fixedly attachable to a seat and movable relative to the first rail (3);
a lock member (25) locking the first rail (3) and the second rail (4) so as to restrain a relative movement between the first rail (3) and the second rail (4); and
a position memorizing mechanism (46,47) provided at the first rail (3) and configured to memorize a first relative position between the first rail (3) and the second rail (4);
wherein the seat apparatus is **characterized in that** the position memorizing mechanism (46,47) comprises:
a third rail (46) arranged along the first rail (3) and having a lock portion (46a); and
a slider (47) slidably moved along the third rail (46) and engaged with and disengaged from the lock portion (46a) of the third rail (46), and the seat apparatus further comprises:
an actuating member (100) provided at one of the second rail (4) and the slider (47) and facing the other one thereof, the actuating member (100) actuating the slider (47) to move along the third rail (46) in response to a movement of the second rail when the slider (47) is at a disengaged state with the lock portion (46a) and to retain at a first position when the slider (47) is at an engaged state with the lock portion (46a)
**characterized in that**
the actuating member (100, 300) is a plate-shaped spring having an engagement portion (104,310).

2. A seat apparatus for a vehicle according to claim 1, wherein the engagement portion (104, 310) of the plate-shaped spring (100, 300) is bent to an approximately V-shaped cross section or an approximately ring-shaped cross section.

3. A seat apparatus for a vehicle according to any preceding claim, wherein the actuating member (100) is attached to the second rail (4) and includes a first inclined portion (111) elastically deformed when the actuating member (100) makes a contact with the slider (47) engaged with the lock portion (46a), wherein an elastic deformation of the first inclined portion (111) releases the actuating member (100) from the slider (47).

4. A seat apparatus for a vehicle according to any preceding claim, wherein the actuating member (100) is attached to the second rail (4), the slider (47) includes a first inclined portion (131) configured to elastically deform the actuating member (100) when the actuating member (100) makes a contact with the slider (47) engaged with the lock portion (46a), wherein an elastic deformation of the actuating member (100) releases the actuating member (100) from the slider (47).

5. A seat apparatus for a vehicle according to any of claims 1 to 3, wherein the actuating member (100) is attached to the second rail (4), the slider (47) includes an actuated portion (130) facing the actuating member (100), and the actuated portion (130) has a first inclined surface (131) and a second inclined surface (132) which are opposed to each other and are both contactable with the actuating member (100).

6. A seat apparatus for a vehicle according to any of claims 1 to 2, wherein the actuating member (300) is attached to the slider (47) and includes a first inclined portion (311), an actuated portion (100B) is fixed to the second rail (4), and the first inclined portion (311) is elastically deformed when the actuated portion (100B) makes a contact with the first inclined portion (311) of the actuating member (300) attached to the slider (47) engaged with the lock portion (46a), wherein an elastic deformation of the first inclined portion (311) releases the actuated portion (100B) from the slider (47).

7. A seat apparatus for a vehicle according to claim 6, wherein the actuating member (100) is attached to the slider (47), an actuated portion (100B) is fixed to the second rail (4) and includes a first inclined portion (119a), and the first inclined portion (311) is elastically deformed when the first inclined portion (119a) of the actuated portion (100B) makes a contact with the first inclined portion (311) of the actuating member (300) attached to the slider (47) engaged with the lock portion (46a), wherein an elastic deformation of the first inclined portion (311) releases the actuated portion (100B) from the slider (47).

8. A seat apparatus for a vehicle according to one of claims 1, 2 and 6, wherein the actuating member (100) is attached to the slider (47), an actuated portion (100B) is fixed to the second rail (4) and includes a first inclined portion (119a) and a second inclined portion (119c) which are opposed to each other and are both contactable with the actuating member (100).

9. A seat apparatus for a vehicle according to any preceding claim, further comprising:
an operating member (28) connected to the lock member (25) and configured to release the lock member (25) from locking the first rail (3) and the second rail (4); and
an engagement member (41) connected to the operating member (28) for operating the position memorizing mechanism (46,47) in response to an operation of the operating member (28) so as to disengage the slider (47) from the lock hole (46a) of the third rail (46), to establish the disengaged state when the slider (47) is disengaged from the lock hole (46a), and engage the slider (47) to establish the engaged state when the slider (47) is engaged with the lock hole (46a).

## Patentansprüche

1. Sitzvorrichtung für ein Fahrzeug, die Folgendes aufweist:
eine erste Schiene (3), die geeignet ist, an einem stationären Abschnitt des Fahrzeugs gesichert zu werden;
eine zweite Schiene (4), die fest an einem Sitz befestigbar ist und relativ zu der ersten Schiene (3) bewegbar ist;
ein Sperrbauteil (25), das die erste Schiene (3) und die zweite Schiene (4) sperrt, um so eine relative Bewegung zwischen der ersten Schiene (3) und der zweiten Schiene (4) zu beschränken; und
einen Positionsspeicherungsmechanismus (46, 47), der an der ersten Schiene (3) vorgesehen ist und gestaltet ist, um eine erste relative Position zwischen der ersten Schiene (3) und der zweiten Schiene (4) zu speichern;
wobei sich die Sitzvorrichtung **dadurch** auszeichnet, dass der Positionsspeicherungsmechanismus (46, 47) Folgendes aufweist:
eine dritte Schiene (46), die entlang der ersten Schiene (3) angeordnet ist und einen Sperrabschnitt (46a) aufweist; und
eine Gleitvorrichtung (47), die entlang der dritten Schiene (46) gleitbar bewegt ist und mit dem Sperrabschnitt (46a) der dritten Schiene (46) in Eingriff gelangt und von dieser gelöst ist, wobei die Sitzvorrichtung ferner Folgendes aufweist:
ein Betätigungsbauteil (100), das an einer von der zweiten Schiene (4) und der Gleitvorrichtung (47) vorgesehen ist und der anderen von diesen zugewandt ist, wobei das Betätigungsbauteil (100) die Gleitvorrichtung (47) betätigt, um sich in Erwiderung auf eine Bewegung der zweiten Schiene entlang der dritten Schiene (46) zu bewegen, wenn die Gleitvorrichtung (47) in einem gelösten Zustand mit dem Sperrabschnitt (46a) ist, und um an einer ersten Position festzuhalten, wenn die Gleitvorrichtung (47) in einem eingerückten Zustand mit dem Sperrabschnitt (46a) ist,
**dadurch gekennzeichnet, dass**
das Betätigungsbauteil (100, 300) eine plattenförmige Feder mit einem Eingriffsabschnitt (104, 310) ist.

2. Sitzvorrichtung für ein Fahrzeug nach Anspruch 1, wobei der Eingriffsabschnitt (104, 310) der plattenförmigen Feder (100, 300) in einen annähernd V-förmigen Querschnitt oder einen annähernd ringförmigen Querschnitt gebogen ist.

3. Sitzvorrichtung für ein Fahrzeug nach einem der vorangehenden Ansprüche, wobei das Betätigungsbauteil (100) an der zweiten Schiene (4) befestigt ist und einen ersten geneigten Abschnitt (111) aufweist, der elastisch deformiert ist, wenn das Betätigungsbauteil (100) einen Kontakt mit der Gleitvorrichtung (47) herstellt, die mit dem Sperrabschnitt (46a) in Eingriff steht, wobei eine elastische Deformation des ersten geneigten Abschnitts (111) das Betätigungsbauteil (100) von der Gleitvorrichtung (47) löst.

4. Sitzvorrichtung für ein Fahrzeug nach einem der vorangehenden Ansprüche, wobei das Betätigungsbauteil (100) an der zweiten Schiene (4) befestigt ist, wobei die Gleitvorrichtung (47) einen ersten geneigten Abschnitt (131) aufweist, der gestaltet ist, um das Betätigungsbauteil (100) elastisch zu deformieren, wenn das Betätigungsbauteil (100) einen Kontakt mit der Gleitvorrichtung (47) herstellt, die mit dem Sperrabschnitt (46a) in Eingriff steht, wobei eine elastische Deformation des Betätigungsbauteils (100) das Betätigungsbauteil (100) von der Gleitvorrichtung (47) löst.

5. Sitzvorrichtung für ein Fahrzeug nach einem der Ansprüche 1 bis 3, wobei das Betätigungsbauteil (100) an der zweiten Schiene (4) befestigt ist, die Gleitvorrichtung (47) einen betätigten Abschnitt (130) aufweist, der dem Betätigungsbauteil (100) zugewandt ist, und der betätigte Abschnitt (130) eine erste geneigte Fläche (131) und eine zweite geneigte Fläche (132) aufweist, welche einander gegenüberliegen und die beide mit dem Betätigungsbauteil (100) in Kontakt bringbar sind.

6. Sitzvorrichtung für ein Fahrzeug nach einem der Ansprüche 1 oder 2, wobei das Betätigungsbauteil (300) an der Gleitvorrichtung (47) befestigt ist und einen ersten geneigten Abschnitt (311) aufweist, wobei ein betätigter Abschnitt (100B) an der zweiten Schiene (4) befestigt ist und der erste geneigte Abschnitt (311) elastisch deformiert ist, wenn der betätigte Abschnitt (100B) einen Kontakt mit dem ersten geneigten Abschnitt (311) des Befestigungsbauteils (300) herstellt, das an der Gleitvorrichtung (47) befestigt ist, die mit dem Sperrabschnitt (46a) in Eingriff steht, wobei eine elastische Deformation des ersten geneigten Abschnitts (311) den betätigten Abschnitt (100B) von der Gleitvorrichtung (47) löst.

7. Sitzvorrichtung für ein Fahrzeug nach Anspruch 6, wobei das Betätigungsbauteil (100) an der Gleitvorrichtung (47) befestigt ist, ein betätigter Abschnitt (100B) an der zweiten Schiene (4) befestigt ist und einen ersten geneigten Abschnitt (119a) aufweist und wobei der erste geneigte Abschnitt (311) elastisch deformiert ist, wenn der erste geneigte Abschnitt (119a) des betätigten Abschnitts (100B) einen Kontakt mit dem ersten geneigten Abschnitt (311) des Betätigungsbauteils (300) herstellt, das an der Gleitvorrichtung (47) befestigt ist, die mit dem Sperrabschnitt (46a) in Eingriff steht, wobei eine elastische Deformation des ersten geneigten Abschnitts (311) den betätigten Abschnitt (100B) von der Gleitvorrichtung (47) löst.

8. Sitzvorrichtung für ein Fahrzeug nach einem der Ansprüche 1, 2 und 6, wobei das Betätigungsbauteil (100) an der Gleitvorrichtung (47) befestigt ist, ein betätigter Abschnitt (100B) an der zweiten Schiene (4) befestigt ist und einen ersten geneigten Abschnitt (119a) und einen zweiten geneigten Abschnitt (119c) aufweist, die einander gegenüberliegen und die beide mit dem Betätigungsbauteil (100) in Kontakt bringbar sind.

9. Sitzvorrichtung für ein Fahrzeug nach einem der vorangehenden Ansprüche, die ferner Folgendes aufweist:
ein Betriebsbauteil (28), das mit dem Sperrbauteil (29) verbunden ist und gestaltet ist, um das Sperrbauteil (25) von einem Sperren der ersten Schiene (3) und der zweiten Schiene (4) zu lösen; und
ein Eingriffsbauteil (41), das mit dem Betriebsbauteil (28) zum Betreiben des Positionsspeicherungsmechanismus (46, 47) in Erwiderung auf einen Betrieb des Betriebsbauteils (28) verbunden ist, um so die Gleitvorrichtung (47) von dem Sperrloch (46a) der dritten Schiene (46) auszurücken, den gelösten Zustand herzustellen, wenn die Gleitvorrichtung (47) von dem Sperrloch (46a) ausgerückt ist, und die Gleitvorrichtung (47) einzurücken, um den eingerückten Zustand herzustellen, wenn die Gleitvorrichtung (47) mit dem Sperrloch (46a) in Eingriff steht.

## Revendications

1. Siège pour un véhicule, comportant :
un premier rail (3) prévu pour être fixé sur une partie fixe du véhicule ;
un deuxième rail (4) pouvant être relié de façon à un siège et mobile par rapport au premier rail (3) ;
un élément de blocage (25) qui bloque le premier rail (3) et le deuxième rail (4) de façon à limiter un mouvement relatif entre le premier rail (3) et le deuxième rail (4) ; et
un mécanisme de mémorisation de position (46, 47) prévu au niveau du premier rail (3) et configuré pour mémoriser une première position relative entre le premier rail (3) et le deuxième rail (4) ;
le siège étant **caractérisé en ce que** le mécanisme de mémorisation de position (46, 47) comporte :
un troisième rail (46) disposé le long du premier rail (3) et ayant une partie de blocage (46a) ; et
un élément coulissant (47) déplacé de façon coulissante le long du troisième rail (46) et engagé dans et désengagé de la partie de blocage (46a) du troisième rail (46), et le siège comporte en outre :
un élément d'actionnement (100) prévu au niveau d'un du deuxième rail (4) et de l'élément coulissant (47) et faisant face à l'autre, l'élément d'actionnement (100) actionnant l'élément coulissant (47) afin de se déplacer le long du troisième rail (46) en réponse à un mouvement du deuxième rail quand l'élément coulissant (47) est dans un état désengagé avec la partie de blocage (46a) et afin de maintenir une première position quand l'élément coulissant (47) est dans un état engagé avec la partie de blocage (46a)
**caractérisé en ce que**
l'élément d'actionnement (100, 300) est un ressort en forme de plaque ayant une partie d'engagement (104, 310).

2. Siège pour un véhicule selon la revendication 1, dans lequel la partie d'engagement (104, 310) du ressort en forme de plaque (100, 300) est pliée avec une section transversale approximativement en forme de V ou de forme approximativement annulaire.

3. Siège pour un véhicule selon l'une quelconque des revendications précédentes, dans lequel l'élément d'actionnement (100) est fixé sur le deuxième rail (4) et comprend une première partie inclinée (111) élastiquement déformée quand l'élément d'actionnement (100) établit un contact avec l'élément coulissant (47) engagé dans la partie de blocage (46a), une déformation élastique de la première partie inclinée (111) libérant l'élément d'actionnement (100) de l'élément coulissant (47).

4. Siège pour un véhicule selon l'une quelconque des revendications précédentes, dans lequel l'élément d'actionnement (100) est fixé sur le deuxième rail (4), l'élément coulissant (47) comprend une première partie inclinée (131) configurée pour élastiquement déformer l'élément d'actionnement (100) quand l'élément d'actionnement (100) établit un contact avec l'élément coulissant (47) engagé dans la partie de blocage (46a), une déformation élastique de l'élément d'actionnement (100) libérant l'élément d'actionnement (100) de l'élément coulissant (47).

5. Siège pour un véhicule selon l'une quelconque des revendications 1 à 3, dans lequel l'élément d'actionnement (100) est fixé sur le deuxième rail (4), l'élément coulissant (47) comprend une partie actionnée (130) faisant face à l'élément d'actionnement (100), et la partie actionnée (130) a une première surface inclinée (131) et une deuxième surface inclinée (132) qui sont opposées l'une à l'autre et peuvent toutes deux être en contact avec l'élément d'actionnement (100).

6. Siège pour un véhicule selon l'une quelconque des revendications 1 à 2, dans lequel l'élément d'actionnement (300) est fixé sur l'élément coulissant (47) et comprend une première partie inclinée (311), une partie actionnée (100B) est fixée sur le deuxième rail (4), et la première partie inclinée (311) est élastiquement déformée quand la partie actionnée (100B) établit un contact avec la première partie inclinée (311) de l'élément d'actionnement (300) fixé sur l'élément coulissant (47) engagé dans la partie de blocage (46a), une déformation élastique de la première partie inclinée (311) libérant la partie actionnée (100B) de l'élément coulissant (47).

7. Siège pour un véhicule selon la revendication 6, dans lequel l'élément d'actionnement (100) est fixé sur l'élément coulissant (47), une partie actionnée (100B) est fixée sur le deuxième rail (4) et comprend une première partie inclinée (119a), et la première partie inclinée (311) est élastiquement déformée quand la première partie inclinée (119a) de la partie actionnée (100B) établit un contact avec la première partie inclinée (311) de l'élément d'actionnement (300) fixé sur l'élément coulissant (47) engagé dans la partie de blocage (46a), une déformation élastique de la première partie inclinée (311) libérant la partie actionnée (100B) de l'élément coulissant (47).

8. Siège pour un véhicule selon l'une des revendications 1, 2 et 6, dans lequel l'élément d'actionnement (100) est fixé sur l'élément coulissant (47), une partie actionnée (100B) est fixée sur le deuxième rail (4) et comprend une première partie inclinée (119a) et une deuxième partie inclinée (119c) qui sont opposées l'une à l'autre et peuvent toutes deux être en contact avec l'élément d'actionnement (100).

9. Siège pour un véhicule selon l'une quelconque des revendications précédentes, comportant en outre :
un élément d'actionnement (28) relié à l'élément de blocage (25) et configuré pour libérer l'élément de blocage (25) du blocage du premier rail (3) et du deuxième rail (4) ; et
un élément d'engagement (41) relié à l'élément d'actionnement (28) afin d'actionner le mécanisme de mémorisation de position (46, 47) en réponse à un actionnement de l'élément d'actionnement (28) de façon à désengager l'élément coulissant (47) du trou de blocage (46a) du troisième rail (46), établir l'état désengagé quand l'élément coulissant (47) est désengagé du trou de blocage (46a), et engager l'élément coulissant (47) afin d'établir l'état engagé quand l'élément coulissant (47) est engagé dans le trou de blocage (46a).
